# EUROPÄISCHE PATENTSCHRIFT

(11) **EP 0 538 311 B1**
(45) Veröffentlichungstag und Bekanntmachung des Hinweises auf die Patenterteilung: **24.05.1995**
(21) Anmeldenummer: 91912504.7
(22) Anmeldetag: 09.07.1991
(51) Int. Cl.: D01H 4/12, F16C 39/06

(54) **SCHAFTLOSER OE-SPINNROTOR FÜR AXIALES KOMBINIERTES MAGNET-GASLAGER**
SHAFTLESS OPEN-END SPINNING ROTOR OF AN AXIAL COMBINED MAGNETIC/GAS BEARING
ROTOR DE FILATURE A FIBRE LIBEREE SANS ARBRE POUR PALIERS AXIAUX COMBINES MAGNETIQUES/A GAZ

(30) Priorität: 10.07.1990 SE 9002397
(43) Veröffentlichungstag der Anmeldung: 28.04.1993
(73) Patentinhaber: SKF Textilmaschinen-Komponenten GmbH, D-70376 Stuttgart (DE)
(72) Erfinder: LIND, Björn, S-427 00 Billdal (SE)
(86) Internationale Anmeldenummer: EP9101276
(87) Internationale Veröffentlichungsnummer: WO9201097

(56) Entgegenhaltungen:
- EP-A- 190 440
- DE-A- 2 640 111
- DE-A- 3 000 357

## Beschreibung

Die Erfindung betrifft einen OE-Spinnrotor gemäß Oberbegriff des Anspruches 1 für hohe Drehzahlen und kurze Hochlauf- und Abbremszeiten. Derartige schaftlose Spinnrotoren sind durch die EP-PS 190 440 bekannt, bei denen ein Axialgaslager mit paarig angeordneten Permanentmagneten für die Führung und den Antrieb vereint sind. Der Spinnrotor ist gleichzeitig Läufer eines Antriebsmotors. Entscheidende Vorteile sind die verschleißfreie Lagerung und die einfache Austauschbarkeit. Bei steigenden Rotordrehzahlen ist der Rotordurchmesser zu reduzieren. Dies führt u.a. auch zu kleineren Ringspalten, z.B. zwischen Botor und Gehäuse, bei denen es auch in kritischen Laufzuständen während der Hochlauf- und Abbremsphase nicht zum Berühren des Rotors kommen darf. Die Führungssteifigkeit der bisher bekannten schaftlosen OE-Spinnrotoren war unzureichend, so daß es kritische Drehzahlbereiche mit unzulässigen Taumel- und Schwingbewegungen gab. Bei sehr hohen Drehzahlen gab es auch Rotorbrüche, weil die Haltekräfte für die in Aussparungen des Spinnrotors eingesetzten Antriebsmagnete von den Rotorwänden nicht mehr zusätzlich zu ihren inneren Fliehkraftspannungen aufgenommen werden konnten.

Aufgabe der Erfindung ist es, diese Nachteile zu beseitigen und einen schaftlosen OE-Spinnrotor für ein Axialgaslager mit hoher Führungssteifigkeit und einer bis in die höchsten Bereiche drehzahlfesten Halterung der Antriebsmagnete bei möglichst kleiner Masse und niedrigem Trägheitsmoment zu schaffen.

Der OE-Spinnrotor gemäß Oberbegriff des Anspruches 1 erfüllt diese Aufgabe durch die kennzeichnenden Merkmale des Anspruches 1. Die erforderliche Führungssteifigkeit wird durch die Kombination aus Haltemagneten und Zentriermagneten und die fliehkraftfeste Verankerung der Magnete durch ihre Fixierung mit einem hochfesten Material erzielt, wobei die Verwendung dielektrischer kohlefaserverstärkter Laminate besonders vorteilhaft ist.

Deren hohe Oberflächengüte garantiert gleichzeitig eine geringe Lagerverlustleistung und ihre geringe Masse bei gleichzeitiger hoher Festigkeit ein niedriges Trägheitsmoment.

Die Erfindung wird nachfolgend anhand eines Ausführungsbeispiels näher erläutert.

Es zeigen:
- Fig. 1: Schnitt durch OE-Spinnrotor mit miteinander verklebtem Spinnteil und Antriebsteil;
- Fig. 2: schematische Draufsicht auf das Antriebsteil;
- Fig. 3: Distanzteil, das zwischen die Antriebsmagnete eingebaut wird;
- Fig. 4: Detailausschnitt aus dem Zentrum des Antriebsteils.

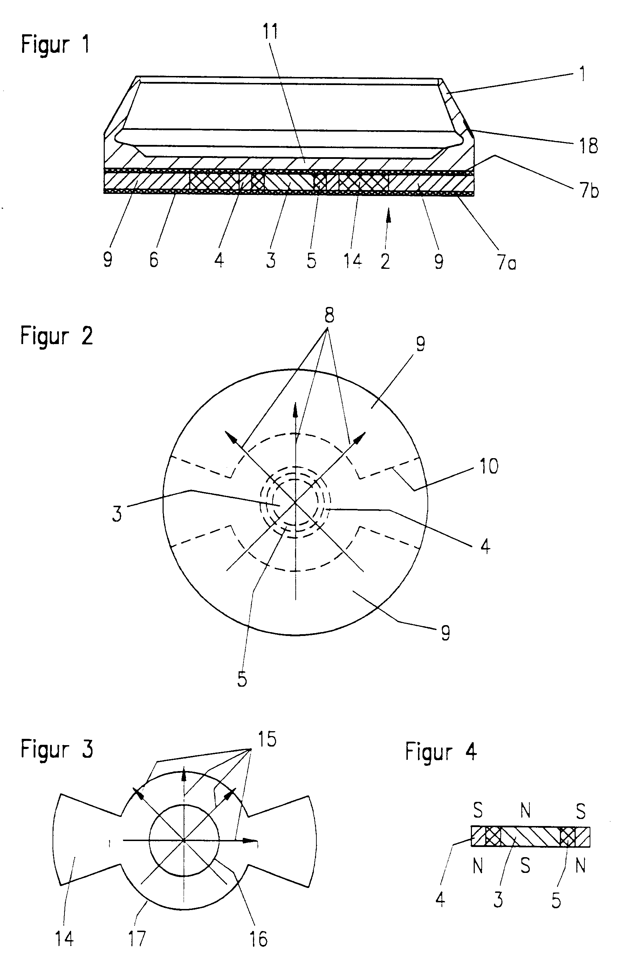

Der schaftlose OE-Spinnrotor, wie im Schnitt in der Figur 1 dargestellt, trägt die passiven Elemente für den Antrieb und die Elemente für die Lagerung auf einem kombinierten Magnet-Gaslager, Dazu gehören in seiner Antriebsseite 2 die Kombination eines scheibenförmigen Permanentmagneten 3 als Haltemagnet und eines konzentrisch zu diesem angeordneten ringförmigen Permanentmagneten 4 als Zentriermagnet, die durch einen Distanzring 5 magnetisch getrennt sind. Um eine besonders wirksame Zentrierung zu erreichen, können auch zwei konzentrische Permanentmagnete 4, die ebenfalls durch einen Distanzring 5 getrennt sind, vorgesehen sein.

Die Halte- und Zentriermagnete, d.h., die Permanentmagnete 3 und 4, werden angezogen von deckungsgleichen Permanentmagneten entgegengesetzter Polarität in einer nicht dargestellten Vorrichtung zum Antrieb und Lagern des schaftlosen OE-Spinnrotors. Diese Permanentmagnete sind also paarweise zueinander angeordnet. Der Abstand zwischen diesen Paaren wird von einem Lagerspalt des kombinierten Magnet-Gaslagers gebildet. Die Außenfläche des OE-Spinnrotors auf der Antriebsseite 2 bildet eine sehr glatte Lagerfläche 6 aus mehrfach geschichteten Laminaten 7a, die durch Kohlefasern wechselnder Faserrichtung 8 verstärkt sind.

Um die im Zentrum des Antriebsteiles 2 angeordneten Permanentmagnete 3, 4 sind im äußeren Bereich des Antriebsteiles 2 dünne Permanentmagnete 9 paarweise, punktsymmetrisch und mit wechselnder Polarität als Antriebsmagnete angeordnet. Diese Antriebsmagnete sind vorzugswiese als Segmente ausgebildet, deren Enden 10 radial verlaufen oder bogenförmig geneigt sind.

Direkt axial diesen Permanentmagneten 9 gegenüber befindet sich der Stator des Axialfeldmotors (nicht dargestellt), der den OE-Spinnrotor antreibt. Sein Antriebsfeld greift in die Permanentmagnete 9 und schließt sich in einem Joch, als das der Boden 11 des Spinnrotors 1 wirkt (Fig. 1).

Im Ausführungsbeispiel ist ein inneres Distanzformteil 14 (Fig. 3) hoher Festigkeit radial zwischen den Magneten 3, 4 und den Magneten 9 mit gleicher Dicke wie die Magnete 3, 4, 9 und mit den Formen dieser Magnete entsprechenden Aussparungen 16, 17 eingebracht. Das Distanzformteil 14 kann auch aus kohlefaserverstärkten Laminaten mit wechselnder Faserrichtung 15 bestehen. Damit braucht das Laminat 7a nicht zusätzlich zu den Fliehkräften der Antriebsmagnete 9 noch solche des Distanzformteiles 14 aufzunehmen.

Über alle Magnete 3, 4, 9 und das Distanzformteil 14 erstrecken sich kreisscheibenförmige feste Laminate 7a, 7b, die auch bei höchsten Drehzahlen die Magnete und das Distanzformteil sicher halten. Es ist zweckmäßig, daß der OE-Spinnrotor auf seinem Außenumfang Markierungen (18) trägt zur Erfassung der Rotorstellung mittels Sensoren, wenn der OE-Spinnrotor durch einen kollektorlosen Axialfeldmotor angetrieben wird.

## Patentansprüche

1. Schaftloser OE-Spinnrotor, der als Läufer eines Axialfeldmotors ausgebildet ist, mit planparalleler Lagerfläche für ein kombiniertes Magnet-Gaslager, welches in die Statorstirnfläche eines Axialfeldmotors integriert ist, und mit Magneten für die Führung und den Antrieb,
dadurch gekennzeichnet, daß im Zentrum der Antriebsseite (2) des Spinnrotors (1) für die Führung dünne,
konzentrische, scheiben- und ringförmige Permanentmagnete (3, 4) mit jeweils wechselnder Polarität, zwischen denen ein konzentrischer, magnetisch nicht leitender Distanzring (5) angeordnet ist, und im äußeren Bereich für seinen Antrieb dünne Permanentmagnete (9) paarweise, punktsymmetrisch und mit wechselnder Polarität angeordnet sind, und daß alle Magnete (3, 4, 9) von einem hochfesten Material auf dem Spinnrotor (1) gehalten werden.

2. OE-Spinnrotor nach Anspruch 1,
dadurch gekennzeichnet, daß alle Magnete (3, 4, 9) außen zumindest einseitig mit Material aus vorzugsweise kohlefaserverstärkten, mehrfach geschichteten Laminaten (7a, 7b) verklebt und gehalten werden und ein inneres Distanzformteil (14) hoher Festigkeit radial zwischen den Magneten (3, 4) und den Magneten (9) mit gleicher Dicke wie die Magnete (3, 4, 9) und mit den Magnetformen entsprechenden Aussparungen (16, 17) eingebracht ist und wobei in den äußeren, kreisscheibenförmigen Laminaten (7a, 7b) die Schichten mit derart wechselnder Faserrichtung (8) gelegt sind, daß sich die Hauptzugfestigkeitsrichtung über die Zone der Permanentmagnete (9) erstreckt.

3. OE-Spinnrotor nach einem der Ansprüche 1 oder 2,
dadurch gekennzeichnet, daß das aus ferromagnetischem Werkstoff bestehende Spinnteil (1) und das Antriebsteil (2) miteinander verklebt sind und der Boden (11) des Spinnteils (1) als Joch zum Schließen des Motor-Hauptmagnetfeldes dient.

4. OE-Spinnrotor nach einem der Ansprüche 1 bis 3,
dadurch gekennzeichnet, daß die als Antriebsmagnete dienenden Permanentmagnete (5) als Segmente ausgebildet sind, deren Enden (10) radial verlaufen oder bogenförmig geneigt sind.

5. OE-Spinnrotor nach einem der Ansprüche 1 bis 4,
dadurch gekennzeichnet, daß bei Verwendung des OE-Spinnrotors auf einem kollektorlosen Axialfeldmotor der OE-Spinnrotor Markierungen (18) zur Erfassung der Rotorstellung mittels Sensoren trägt.

## Claims

1. Shaftless open-end spinning rotor which is designed as a rotor of an axial-field motor, with a plane-parallel bearing face for a combined magnetic/gas bearing which is integrated into the stator end face of an axial-field motor, and with magnets for guidance and drive, characterized in that thin, concentric disc-shaped annular permanent magnets (3, 4), in each case with alternating polarity, between which a concentric, magnetically non-conductive spacer ring (5) is arranged, are located for guidance in the centre of the drive side (2) of the spinning rotor (1) and, for the drive of the latter, thin permanent magnets (9) are arranged in the outer region in pairs, point-symmetrically and with alternating polarity, and in that all the magnets (3, 4, 9) are held on the spinning rotor (1) by a high-strength material.

2. Open-end spinning rotor according to Claim 1, characterized in that all the magnets (3, 4, 9) are adhesively bonded and held externally, at least on one side, by means of material consisting of preferably carbon-fibre-reinforced, multiply layered laminates (7a, 7b), and an inner spacer moulding (14) of high strength is introduced radially between the magnets (3, 4) and the magnets (9), with the same thickness as the magnets (3, 4, 9) and with recesses (16, 17) corresponding to the magnet shapes, the layers being laid in the outer laminates (7a, 7b) in the form of circular discs, with a fibre direction (8) which changes in such a way that the main tensile-strength direction extends over the zone of the permanent magnets (9).

3. Open-end spinning rotor according to one of Claims 1 or 2, characterized in that the spinning part (1) consisting of ferromagnetic material and the driving part (2) are adhesively bonded with one another, and the bottom (11) of the spinning part (1) serves as a yoke for closing the main magnetic field of the motor.

4. Open-end spinning rotor according to one of Claims 1 to 3, characterized in that the permanent magnets (5) serving as driving magnets are designed as segments, the ends (10) of which extend radially or are inclined arcuately.

5. Open-end spinning rotor according to one of Claims 1 to 4, characterized in that, when the open-end spinning rotor is used on a commutatorless axial-field motor, the open-end spinning rotor carries markings (18) for recording the rotor position by means of sensors.

## Revendications

1. Un rotor de filature à fibre libérée sans arbre, qui constitue l'induit d'un moteur à champ axial, comprend une surface d'appui plane et parallèle d'un palier combiné magnétique/à gaz, lequel est intégré dans la surface extérieure du stator d'un moteur à champ axial et est muni d'aimants pour le guidage et l'entraînement, caractérisé par le fait qu'au centre du côté entraînement (2) du rotor de filature (1) sont disposés, pour le guidage, des aimants permanents (3, 4) minces, concentriques, annulaires et en forme de disques, avec des polarités alternantes, et entre lesquels est disposée une bague d'écartement (5) concentrique et non conductrice d'énergie magnétique, et que dans la partie extérieure, pour son entraînement, sont disposés par paires des aimants permanents minces (9), à symétrie ponctuelle et à polarité alternante, et que tous les aimants (3, 4, 9) sont retenus sur le rotor de filature (1) par un matériau extrêmement résistant.

2. Un rotor de filature à fibre libérée conforme à la revendication 1, caractérisé par le fait que tous les aimants (3, 4, 9) sont collés et retenus à l'extérieur, au moins d'un coté, par des agglomérés stratifiés (7a, 7b) de préférence en fibre de carbone et sur plusieurs couches, et qu'une pièce d'écartement interne (14) de haute résistance est insérée de façon radiale entre les aimants (3, 4) et les aimants (9) avec la même épaisseur que les aimants (3, 4, 9) et avec des évidements (16, 17) correspondant à la forme des aimants, et pour lequel, dans les agglomérés stratifiés (7a, 7b) extérieurs en forme de plaques circulaires, les couches sont appliquées avec une orientation alternée des fibres (8) de telle façon que la direction de la résistance à la traction principale s'étend sur la zone d'aimantation permanente (9).

3. Un rotor de filature à fibre libérée conforme à l'une des revendications 1 ou 2, caractérisé par le fait que la partie filature (1) en matériau ferromagnétique et la partie entraînement (2) sont collées ensemble et que le fond (11) de la partie filature (1) sert de culasse magnétique pour la fermeture du champ magnétique principal du moteur.

4. Un rotor de filature à fibre libérée conforme à l'une des revendications 1 à 3, caractérisé par le fait que les aimants permanents (5) servant d'aimants d'entraînement sont réalisés sous forme de segments dont les extrémités (10) ont un tracé radial ou sont cintrés.

5. Un rotor de filature à fibre libérée conforme à l'une des revendications 1 à 4, caractérisé par le fait que lors de l'utilisation du rotor de filature à fibre libérée sur un moteur à champ axial sans collecteur, les repères (18) du rotor de filature à fibre libérée servent à la détection de la position du rotor au moyen de capteurs.
